# EUROPÄISCHE PATENTSCHRIFT

(11) **EP 1 360 806 B1**
(45) Veröffentlichungstag und Bekanntmachung des Hinweises auf die Patenterteilung: **06.10.2004**
(21) Anmeldenummer: 02700166.8
(22) Anmeldetag: 24.01.2002
(51) Int. Cl.: H04L 12/58, H04L 12/18

(54) **VERFAHREN ZUR ÜBERMITTLUNG VON DATEN ÜBER KOMMUNIKATIONSNETZE**
METHOD FOR TRANSMITTING DATA VIA COMMUNICATION NETWORKS
PROCEDE POUR TRANSMETTRE DES DONNEES PAR L'INTERMEDIAIRE DE RESEAUX DE COMMUNICATION

(30) Priorität: 15.02.2001 DE 10107174
(43) Veröffentlichungstag der Anmeldung: 12.11.2003
(73) Patentinhaber: Siemens Aktiengesellschaft, 80333 München (DE)
(72) Erfinder: SCHMIDT, Andreas, 38114 Braunschweig (DE); TRAUBERG, Markus, 38159 Velchede (DE); LAUMEN, Josef, 31141 Hildesheim (DE)
(86) Internationale Anmeldenummer: PCT/DE2002/000240
(87) Internationale Veröffentlichungsnummer: WO 2002/065718

(56) Entgegenhaltungen:
- EP-A- 0 306 781
- US-A- 5 892 909

## Beschreibung

Die vorliegende Erfindung bezieht sich auf ein Verfahren zur Übermittlung von Daten über Kommunikationsnetze, wie durch den Oberbegriff des unabhängigen Patentanspruches 1 beschrieben.

Die gezielte Übertragung von Daten bzw. das Verschicken von e-mails über das Internet an bestimmte Empfänger hat in den letzten Jahren eine immer größere Bedeutung erlangt. Entsprechendes gilt für das Versenden von Textnachrichten, sogenannter Short Messages (SMS) über die bestehenden GSM-Mobilfunknetze.

Auch für die Mobilfunksysteme der nächsten Generation, die sogenannten UMTS-Netze (Universal Mobile Telecommunication System) sind ähnliche Nachrichtensysteme vorgesehen, wobei insbesondere eine multimediafähige Variante eines mobilen Nachrichtendienstes, der sogenannte MMS (Multimedia Messaging Service) vorgesehen ist. Damit sollen die Vorteile des e-mail-Verkehrs, wie er im Internet bereits gang und gäbe ist, auch für den mobilen Einsatz nutzbar gemacht werden.

Beim Verschicken von elektronischer Post (e-mail) innerhalb eines IP-Netzwerkes (IP - Internet Protocol) oder zwischen IP-Netzwerken sind vorrangig zwei Netzwerk-Elemente aktiv.

Zunächst wird im UA (UA - User Agent) die elektronische Post zusammengestellt, d.h. der Text wird geschrieben, eventl. werden Dateien angehängt und die Adressierung wird vorgenommen.

Anschließend wird die elektronische Post vom UA an einen bekannten MTA (MTA - Message Transfer Agent) gesendet. Von diesem wird sie über verschiedene andere MTA's durch das Netzwerk zum E-mail-System des Empfängers transportiert.

Möchte der Absender ein und dieselbe elektronische Postsendung an mehrere Empfänger verschicken, so kann er eine Verteilerliste mit allen Empfänger-Adressen einrichten und beim Versand seiner elektronischen Postsendung zur Adressierung die entsprechende Verteilerliste als Empfänger-Adresse benutzen. Nach der Zustellung der elektronischen Postsendung an das Netzwerkelement, das die Verteilerliste verwaltet, wird dort für jedes einzelne Mitglied dieser Verteilerliste eine eigene elektronische Postsendung erzeugt und diese dann individuell weitergeleitet.

Verteilerlisten können auf unterschiedlichen Netzwerkelementen, nämlich zum einen lokal im UA, beim MTA des Absenders oder auch irgendwo auf einem Netzwerkserver, als sogenanntem Reflektor, eingerichtet werden. Dementsprechend können von einer an eine Verteilerliste adressierten elektronische Postsendung entweder schon im UA des Absenders, beim MTA des Absenders oder erst nach dem Erreichen des Servers, der den Reflektor verwaltet, mehrere Kopien erzeugt und diese als einzelne Postsendungen weitergeschickt werden.

Eine elektronische Postsendung besteht aus einem Header und einem Body. Im Header sind solche Daten enthalten, die von den MTA's zum Transport der elektronischen Postsendung benötigt werden, während der Body die eigentliche Nachricht enthält. Nach dem gleichen Prinzip ist auch eine Multimedia Message aufgebaut. Auch im MMS ist die Verwendung von einigen RFC 822 Standard-Header-Feldern, neben weiteren MMSspezifischen Headern, vorgesehen.

Nachteilig bei den bisher bekannten Verfahren zur Übermittlung von Daten bzw. elektronischer Post an eine Auswahl von Adressaten einer Verteilerliste ist, daß hierzu alle Adressen der Auswahl separat eingegeben werden müssen, d.h. die Verteilerliste in dem Moment, in dem einige wenige Adressaten der Verteilerliste vom Empfang ausgeschlossen werden sollen, nicht mehr brauchbar ist (cf zum Beispiel EP 0 306 781 oder US 5 892 909).

Die Aufgabe der vorliegenden Erfindung ist es daher ein Verfahren zur Übermittlung von Daten, insbesondere elektronischen Textnachrichten, über Kommunikationsnetze vorzusehen, die eine Einschränkung auf eine Auswahl von in einer Verteilerliste enthaltenen Adressaten, bei gleichzeitiger Verwendung der Verteilerliste ermöglicht.

Diese Aufgabe wird durch die Merkmale des unabhängigen Patentanspruches 1 gelöst wobei zweckmäßige Ausführungsformen durch die Merkmale der Unteransprüche beschrieben sind.

Vorgesehen ist ein Verfahren zur Übermittlung von Daten, insbesondere aus einem Header und einem Body bestehenden elektronischen Textnachrichten, über Kommunikationsnetze, wie Internet, Mobilfunk, etc., an eine Auswahl von in einer Verteilerliste enthaltenen Adressaten, welches sich nach Maßgabe der vorliegenden Erfindung dadurch auszeichnet, daß in dem Netzwerkelement, welches die Verteilerliste verwaltet, vor der Weiterleitung der Daten ein automatischer Abgleich der Verteilerliste mit einer den zu übermittelnden Daten beigefügten Ausschlußliste durchgeführt wird.

Die Ausschlußliste ist dabei vorzugsweise durch ein zusätzliches Header-Feld realisiert. Dabei kann das zusätzliche Header-Feld als RFC 822 Standard-Header-Feld vorgesehen sein. Das zusätzliche Header-Feld kann im Multimedia Messaging Service (MMS) aber ebenso gut gemäß den MMS-Encapsulation Standards kodiert werden, wobei eine hexadezimale Codierung wie z.B. OxlF (dezimal 31) verwendet werden kann. Das zusätzliche Header-Feld kann aber auch als Text-String codiert werden.

Vorzugsweise ist das Verfahren auch derart ausgestaltet, daß das Netzwerkelement, welches die Verteilerliste verwaltet, vor dem Abgleich der Verteilerliste überprüft, ob überhaupt eine Ausschlußliste vorhanden ist.

Das Verfahren nach Maßgabe der vorliegenden Erfindung führt zu erheblichen Vereinfachungen.

Nimmt man an, daß eine elektronischen Postsendung an neunundneunzig von hundert Adressen einer Verteilerliste geschickt werden soll, dann müßte der Absender nach dem bisherigen Stand der Technik die neunundneunzig Empfänger-Adressen einzeln eingeben.

Nach dem Verfahren der vorliegenden Erfindung kann der Absender als Empfänger-Adresse jedoch weiterhin wie gewohnt die Verteilerliste angeben und in einem separaten Feld zusätzlich die Adresse desjenigen/derjenigen Empfänger(s), der/die vom Empfang der elektronischen Postsendung ausgeschlossen werden soll/sollen. Dies verbessert unter anderem den Komfort beim Adressieren von elektronischen Postsendungen erheblich.

Das Verfahren nach Maßgabe der vorliegenden Erfindung ist aber insbesondere beim Versenden von elektronischer Post über Mobilfunksysteme von Vorteil, da das Datenaufkommen bei der Übertragung über die sehr teure Luftschnittstelle zwischen Mobilfunkgerät und Basisstation erheblich reduziert werden kann, was sowohl technisch als auch wirtschaftlich von erheblichem Vorteil ist.

Weitere Eigenschaften und Vorteile der Erfindung ergeben sich aus der folgenden Beschreibung einer Ausführungsform des Verfahrens unter Bezugnahme auf die beigefügten Zeichnungen; darin zeigt:
- Fig. 1: das schematische Beispiel einer Verteilerliste;
- Fig. 2: die Darstellung der bisherigen Adressierung bei Übermittlung an eine Auswahl von Adressen einer Verteilerliste; und
- Fig. 3: die Darstellung der Adressierung bei Übermittlung an eine Auswahl von Adressen einer Verteilerliste gemäß der Erfindung.

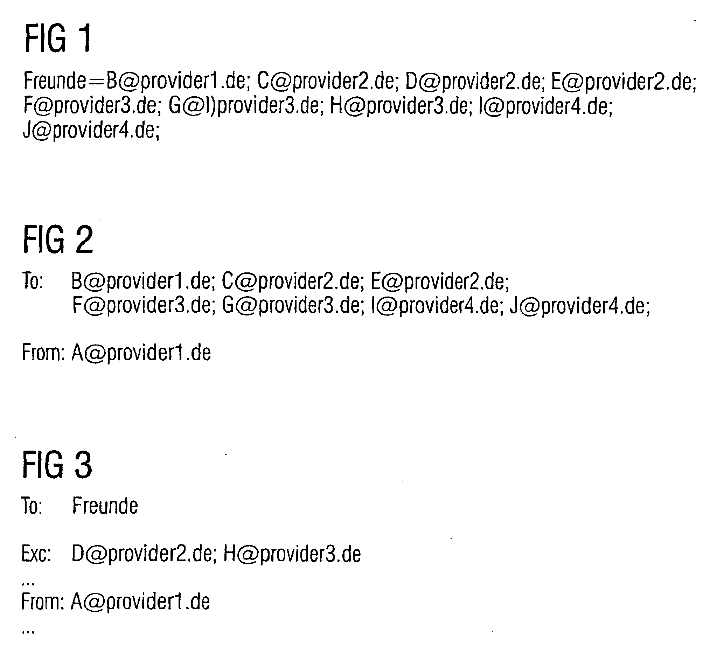

Die Fig. 1 zeigt in schematischer Art und Weise eine Verteilerliste, wie sie für die Gruppenversendung von elektronischen Nachrichten, wie Email, SMS, MMS, etc. Verwendung finden könnte. In der Verteilerliste, wie dargestellt, sind die Adressen von neun Personen (B bis J) zusammengefaßt.

Möchte man eine Anfrage an den in der Verteilerliste enthaltenen Adressatenkreis verschicken, allerdings mit Ausnahme von Adresse D, und mit Ausnahme von Adresse H, so besteht derzeit die einzige Möglichkeit darin, alle Adressen der Verteilerliste, die die Anfrage erhalten sollen, einzeln anzugeben.

Diese Situation ist in der Fig. 2 dargestellt. Der Header einer e-mail für diesen Fall sieht nach dem bisherigen Stand der Technik folgendermaßen aus: In dem RFC 822 Standard-Header-Feld mit der Bezeichnung "To" sind 7 (= 9 - 2) Empfängeradressen, nämlich die neun Adressen der Verteilerliste nach Fig. 1, abzüglich der Adressen D und H einzeln eingetragen.

Sieht man nun, wie nach Maßgabe der Erfindung vorgesehen, ein Verfahren zur Übermittlung von Daten, insbesondere elektronischen Textnachrichten, über Kommunikationsnetze, wie Internet, Mobilfunk, etc., an eine Auswahl von in einer Verteilerliste enthaltenen Adressaten vor, bei dem in dem Netzwerkelement, welches die Verteilerliste verwaltet, vor der Weiterleitung der Daten ein automatischer Abgleich der Verteilerliste mit einer den zu übermittelnden Daten beigefügten Ausschlußliste durchgeführt wird, so kann der Absender seine elektronische Anfrage, Email oder Übermittlung, wie gewohnt an die Verteilerliste nach Fig. 1 adressieren und zusätzlich denjenigen/diejenigen Adressaten benennen, die vom Empfang der elektronischen Anfrage ausgeschlossen werden soll/sollen. Diese Situation ist in schematischer Art und Weise in der Fig. 3 dargestellt.

In dem Header-Feld mit der Bezeichnung "To" steht in diesem Fall wie gewohnt nur der Name der Verteilerliste, hier "Freunde". Die Adressen derjenigen Empfänger, die ausgeschlossen werden sollen, stehen in dem neu eingeführten Header Feld, das zum Beispiel die Bezeichnung Exc (für exclude), aber auch jede andere sinnvolle Bezeichnung tragen könnte.

Das Netzwerkelement, der UA, das MTA, oder der Server, in dessen Zuständigkeitsbereich das Auswerten der Verteilerliste fällt, überprüft nach dem Erhalt der elektronischen Post zunächst, ob das Feld Exc vorhanden ist und ob die darin stehenden Empfänger-Adressen auch tatsächlich auf der Verteilerliste enthalten sind. Ist dies der Fall, so werden diese dann vom weiteren Versand der einzelnen Postsendungen an die individuellen Empfänger-Adressen ausgeschlossen.

Im oben gezeigten Beispiel wurde das zusätzliche Header-Feld "Exc" als RFC 822 Standard-Header-Feld eingeführt. Das zusätzliche Feld könnte alternativ oder ergänzend auch für den MMS-Verkehr im Mobilfunk realisiert werden. Eine möglich Bezeichnung für das zusätzliche Header-Feld im Bereich MMS wäre z.B. die Bezeichnung *X-MMS-Exclude*.

Header-Felder im MMS können gemäß des MMSEncapsulation Standards effizient kodiert werden: Für die Kodierung des neuen zusätzlichen Header-Feldes ist z.B. eine hexadezimale Codierung Oxl F (dezimal 31) denkbar. Weiter ist denkbar, die Einträge des neuen Header-Feldes als Text-String zu codieren.

## Patentansprüche

1. Verfahren zur Übermittlung von Daten, insbesondere elektronischen Textnachrichten, über Kommunikationsnetze, wie Internet, Mobilfunk, etc., an eine Auswahl von in einer Verteilerliste enthaltenen Adressaten,
**dadurch gekennzeichnet,**
**daß** in dem Netzwerkelement, welches die Verteilerliste verwaltet, vor der Weiterleitung der Daten ein automatischer Abgleich der Verteilerliste mit einer den zu übermittelnden Daten beigefügten Ausschlußliste durchgeführt wird.

2. Verfahren nach Anspruch 1,
**dadurch gekennzeichnet,**
**daß** die Ausschlußliste durch ein zusätzliches Header-Feld realisiert ist.

3. Verfahren nach einem der Ansprüche 1 oder 2,
**dadurch gekennzeichnet,**
**daß** das Netzwerkelement, welches die Verteilerliste verwaltet, vor dem Abgleich der Verteilerliste überprüft, ob eine Ausschlußliste vorhanden ist.

4. Verfahren nach einem der vorhergehenden Ansprüche,
**dadurch gekennzeichnet,**
**daß** das zusätzliche Header-Feld als RFC 822 Standard-Header-Feld vorgesehen ist.

5. Verfahren nach einem der Ansprüche 1 bis 3,
**dadurch gekennzeichnet,**
**daß** das zusätzliche Header-Feld im Multimedia Messaging (MMS) Service gemäß den MMS-Encapsulation Standards kodiert wird.

6. Verfahren nach Anspruch 5,
**dadurch gekennzeichnet,**
**daß** für die Kodierung des zusätzlichen Header-Feldes eine hexadezimale Codierung verwendet wird.

7. Verfahren nach Anspruch 6,
**dadurch gekennzeichnet,**
**daß** für die Kodierung die hexadezimale Kodierung Ox1F (dezimal 31) verwendet wird

8. Verfahren nach einem der Ansprüche 2 bis 5,
**dadurch gekennzeichnet,**
**daß** die Einträge des zusätzlichen Header-Feldes als Text-String codiert werden.

## Claims

1. Method for transmitting data, in particular electronic text messages, over communication networks such as Internet, mobile radio telephone services, etc., to a selection of addressees contained in a distribution list,
**characterised in that**
an automatic synchronisation is performed in the network element managing the distribution list between said distribution list and an exclusion list added to the data which is to be transmitted, prior to the forwarding of said data.

2. Method according to Claim 1,
**characterised in that**
the exclusion list is implemented by an additional header field.

3. Method according to one of the Claims 1 or 2,
**characterised in that**
the network element administering the distribution list checks prior to the synchronisation of the distribution list whether an exclusion list exists.

4. Method according to one of the preceding Claims,
**characterised in that**
the additional header field is provided as an RFC 822 standard header field.

5. Method according to one of the Claims 1 to 3,
**characterised in that**
the additional header field is encoded in the Multimedia Messaging Service (MMS) according to the MMS encapsulation standards.

6. Method according to Claim 5,
**characterised in that**
hexadecimal encoding is employed for encoding the additional header field.

7. Method according to Claim 6,
**characterised in that**
0x1F (decimal 31) hexadecimal encoding is employed for encoding.

8. Method according to one of the Claims 2 to 5,
**characterised in that**
the entries in the additional header field are encoded as a text string.

## Revendications

1. Procédé destiné à la transmission de données, notamment de messages texte électroniques, par l'intermédiaire de réseaux de communication, tels que l'Internet, la radio mobile, etc., à une sélection de destinataires énumérés dans une liste de distribution
**caractérisé par le fait**
**que**, dans l'élément de réseau qui gère la liste de distribution, est effectuée, avant la retransmission des données, une adaptation automatique de la liste de distribution à l'aide d'une liste d'exclusion annexée aux données à transmettre.

2. Procédé selon la revendication 1
**caractérisé par le fait**
**que** la liste d'exclusion est réalisée par un champ d'en-tête supplémentaire.

3. Procédé selon l'une des revendications 1 ou 2
**caractérisé par le fait**
**que** l'élément de réseau qui gère la liste de distribution vérifie, avant l'adaptation de la liste de distribution, s'il existe une liste d'exclusion.

4. Procédé selon l'une des revendications précédentes
**caractérisé par le fait**
**que** le champ d'en-tête supplémentaire est prévu comme champ d'en-tête normalisé selon RFC 822.

5. Procédé selon l'une des revendications 1 à 3
**caractérisé par le fait**
**que** le champ d'en-tête supplémentaire est codé, dans le service de messagerie multimédia (en anglais, Multimédia Messaging Service MMS) conformément à la norme MMS-Encapsulation.

6. Procédé selon la revendication 5
**caractérisé par le fait**
**que**, pour le codage du champ d'en-tête supplémentaire, on utilise un codage hexadécimal.

7. Procédé selon la revendication 6
**caractérisé par le fait**
**que**, pour le codage, on utilise le codage hexadécimal Ox1 F (31 décimal).

8. Procédé selon l'une des revendications 2 à 5
**caractérisé par le fait**
**que** les inscriptions du champ d'en-tête supplémentaire sont codées comme chaînes de texte.
